# EUROPEAN PATENT SPECIFICATION

(11) **EP 4 562 870 B1**
(45) Date of publication and mention of the grant of the patent: **28.10.2026**
(21) Application number: 22776959.3
(22) Date of filing: 12.09.2022
(51) Int. Cl.: H04L 12/14, H04L 67/52, H04M 15/00, H04W 4/24, H04W 4/021, H04L 67/10

(54) **METHODS AND APPARATUSES FOR PROVISIONING EDGE SERVICES IN FEDERATED DEPLOYMENTS OF WIRELESS COMMUNICATIONS NETWORKS**
VERFAHREN UND VORRICHTUNGEN ZUR BEREITSTELLUNG VON EDGE-DIENSTEN BEI FÖDERIERTEN EINSÄTZEN VON DRAHTLOSEN KOMMUNIKATIONSNETZEN
PROCÉDÉS ET APPAREILS DE FOURNITURE DE SERVICES DE PÉRIPHÉRIE LORS DE DÉPLOIEMENTS FÉDÉRÉS DE RÉSEAUX DE COMMUNICATION SANS FIL

(30) Priority: 25.07.2022 GR 20220100595
(43) Date of publication of application: 04.06.2025
(73) Proprietor: Lenovo (Singapore) Pte. Ltd, New Tech Park 556741 (SG)
(72) Inventor: VAISHNAVI, Ishan, 80333 Munich (DE); PATEROMICHELAKIS, Emmanouil, 82110 Germering (DE)
(74) Representative: Openshaw & Co.
(86) International application number: PCT/EP2022/075243
(87) International publication number: WO 2024/022596

(56) References cited:
- WO-A1-2021/261904
- QUALCOMM INCORPORATED: "Edge Computing platform capability discovery", vol. SA WG6, no. Reno, NV, USA; 20191111 - 20191115, 4 November 2019 (2019-11-04), XP051813234, Retrieved from the Internet <URL:https://ftp.3gpp.org/tsg_sa/WG6_MissionCritical/TSGS6_034_Reno/docs/S6-192170.zip S6-192170 Edge capability discovery.doc> [retrieved on 20191104]

## Description

### Field

The subject matter disclosed herein relates generally to the field of implementing methods and apparatuses for provisioning edge services in federated deployments of wireless communications networks. This document defines a management system in a mobile network and a method performed by a management system of a mobile network.

### Background

In 3GPP EDGEAPP (3GPP TS 23.558 v17.4.0), an application layer functional model for an edge enablement layer has been specified. In this architecture, the main capabilities specified relate to an Edge Enabler Server (EES), an Edge Configuration Server (ECS) and EDGE-x interfaces.

Additionally, in SA5 (TS28.538 v17.7.1) an overall management framework was described. In the overall management framework, an edge computing management framework is provided containing a Public Land Mobile Network (PLMN) management system and Edge Computing Service Provider (ECSP) management system. The ECSP management system, as a producer, provides management services enabling Application Service Provider (ASP) and ECSP consumers to orchestrate and manage Edge Data Network (EDN) network function (NFs), e.g., EAS, EES, and ECS. PLMN management system, as the producer, provides management services enabling ECSP management system to interconnect EDN NFs with 5GC NFs (e.g., PCF, UPF, NEF). Both the ECSP management system and the PLMN management system communicate with ETSI network functions virtualization Management and Orchestration (NFV MANO) to perform lifecycle management functions.

WO2021261904A1 discloses a method for deploying an edge application server (EAS). The method includes receiving an EAS deployment request to create an EAS instance associated with an EASFunction class, identifying, based on the EAS deployment request, one or more requirements for the EAS instance, selecting an edge data network (EDN) based on the one or more requirements for the EAS instance, and creating a managed object instance (MOI) corresponding to the EAS deployment request.

### Summary

Disclosed herein are procedures for provisioning edge services in federated deployments of wireless communications networks. Said procedures may be implemented by a management system of a mobile network. The invention is defined by the appended independent claims.

In an aspect, there is provided a management system in a mobile network, the management system comprising one or more processors arranged to: receive a request to provide an Edge Service, the request indicating a geography in which the Edge Service is to be provided; identify at least one Edge Data Network, EDN, to use to provide the requested Edge Service based on at least a part of the indicated geography; and request deployment or configuration of an Edge Application Server, EAS, in the identified EDN to provide the requested Edge Service in the specified geography.

In a further aspect, there is provided a method performed by a management system of a mobile network, the method comprising: receiving a request to provide an Edge Service, the request indicating a geography in which the Edge Service is to be provided; identifying at least one Edge Data Network, EDN, to use to provide the requested Edge Service based on the indicated geography; and requesting deployment or configuration of an Edge Application Server, EAS, in the identified EDN to provide the requested Edge Service in the specified geography.

In a further aspect, there is provided an apparatus in a mobile network, the apparatus comprising one or more processors arranged to: receive a request to provide an Edge Service, the request indicating a geography in which the Edge Service is to be provided; and identify at least one Edge Data Network, EDN, to use to provide the requested Edge Service based on at least a part of the indicated geography.

### Brief description of the drawings

In order to describe the manner in which advantages and features of the disclosure can be obtained, a description of the disclosure is rendered by reference to certain apparatus and methods which are illustrated in the appended drawings. Each of these drawings depict only certain aspects of the disclosure and are not therefore to be considered to be limiting of its scope. The drawings may have been simplified for clarity and are not necessarily drawn to scale.

Methods and apparatus for provisioning edge services in federated deployments of wireless communications networks will now be described, by way of example only, with reference to the accompanying drawings, in which:
Figure 1 depicts a wireless communication system (not to scale) in which the methods and apparatuses disclosed herein may be implemented;
Figure 2 depicts an application layer functional model for an edge enablement layer as outlined in 3GPP TS 23.558 v17.4.0;
Figure 3 depicts an edge computing management framework as outlined in 3GPP TS28.538 v17.7.1;
Figure 4 depicts relationships involved in edge computing services during federation and roaming;
Figure 5 depicts an Edge Application Server deployed by different Edge Computing Service Providers, as described in 3GPP TR 23.700-98 v.1.1.1;
Figure 6 depicts an edge node sharing scenario between a first operator platform and a second operator platform;
Figure 7 depicts a user equipment apparatus that may be used for implementing the methods described herein;
Figure 8 depicts a network node that may be used for implementing the methods described herein;
Figure 9 depicts a procedure for configuring/ selecting and provisioning edge services in a wireless network; and
Figure 10 is a process flow diagram depicting steps of a method performed by a management system for configuring/selecting and provisioning edge services in a wireless network.

### Detailed description

As will be appreciated by one skilled in the art, aspects of this disclosure may be embodied as a system, apparatus, method, or program product. Accordingly, arrangements described herein may be implemented in an entirely hardware form, an entirely software form (including firmware, resident software, micro-code, etc.) or a form combining software and hardware aspects.

For example, the disclosed methods and apparatus may be implemented as a hardware circuit comprising custom very-large-scale integration ("VLSI") circuits or gate arrays, off-the-shelf semiconductors such as logic chips, transistors, or other discrete components. The disclosed methods and apparatus may also be implemented in programmable hardware devices such as field programmable gate arrays, programmable array logic, programmable logic devices, or the like. As another example, the disclosed methods and apparatus may include one or more physical or logical blocks of executable code which may, for instance, be organized as an object, procedure, or function.

Furthermore, the methods and apparatus may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In certain arrangements, the storage devices only employ signals for accessing code.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random-access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain, or store, a program for use by or in connection with an instruction execution system, apparatus, or device.

Reference throughout this specification to an example of a particular method or apparatus, or similar language, means that a particular feature, structure, or characteristic described in connection with that example is included in at least one implementation of the method and apparatus described herein. Thus, reference to features of an example of a particular method or apparatus, or similar language, may, but do not necessarily, all refer to the same example, but mean "one or more but not all examples" unless expressly specified otherwise. The terms "including", "comprising", "having", and variations thereof, mean "including but not limited to", unless expressly specified otherwise. An enumerated listing of items does not imply that any or all of the items are mutually exclusive, unless expressly specified otherwise. The terms "a", "an", and "the" also refer to "one or more", unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one, and only one, of any single item in the list. For example, "one of A, B and C" includes only A, only B or only C and excludes combinations of A, B and C. As used herein, "a member selected from the group consisting of A, B, and C" includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

Furthermore, the described features, structures, or characteristics described herein may be combined in any suitable manner. In the following description, numerous specific details are provided, such as examples of programming, software modules, user selections, network transactions, database queries, database structures, hardware modules, hardware circuits, hardware chips, etc., to provide a thorough understanding of the disclosure. One skilled in the relevant art will recognize, however, that the disclosed methods and apparatus may be practiced without one or more of the specific details, or with other methods, components, materials, and so forth. In other instances, well-known structures, materials, or operations are not shown or described in detail to avoid obscuring aspects of the disclosure.

Aspects of the disclosed method and apparatus are described below with reference to schematic flowchart diagrams and/or schematic block diagrams of methods, apparatuses, systems, and program products. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams.

The code may also be stored in a storage device that can direct a computer, other programmable data processing apparatus, or other devices to function in a particular manner, such that the instructions stored in the storage device produce an article of manufacture including instructions which implement the function/act specified in the schematic flowchart diagrams and/or schematic block diagrams.

The code may also be loaded onto a computer, other programmable data processing apparatus, or other devices to cause a series of operational steps to be performed on the computer, other programmable apparatus, or other devices to produce a computer implemented process such that the code which executes on the computer or other programmable apparatus provides processes for implementing the functions /acts specified in the schematic flowchart diagrams and/or schematic block diagram.

The schematic flowchart diagrams and/or schematic block diagrams in the Figures illustrate the architecture, functionality, and operation of possible implementations of apparatuses, systems, methods, and program products. In this regard, each block in the schematic flowchart diagrams and/or schematic block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

The description of elements in each figure may refer to elements of proceeding Figures. Like numbers refer to like elements in all Figures.

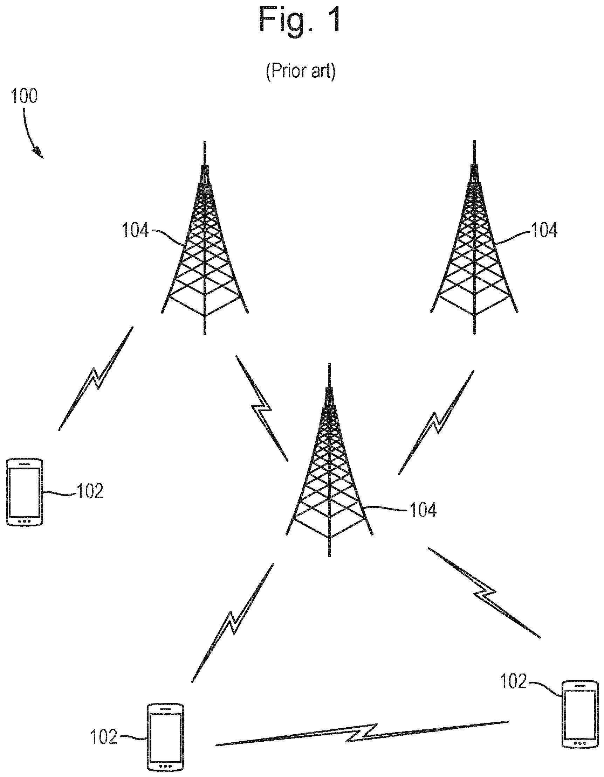

Figure 1 depicts a wireless communication system 100 in which the methods and apparatuses disclosed herein may be implemented. The wireless communication system 100 includes remote units 102 and network units 104. Even though a specific number of remote units 102 and network units 104 are depicted in Figure 1, one of skill in the art will recognize that any number of remote units 102 and network units 104 may be included in the wireless communication system 100. The wireless communication system 100 may further comprise additional entities which are not shown in Figure 1, e.g. edge computing entities, for example but not limited to one or more EDNs, one or more ECSPs, and one or more EASs. The functionality of such additional entities is described in more detail later below.

In one example, the remote units 102 may include computing devices, such as desktop computers, laptop computers, personal digital assistants ("PDAs"), tablet computers, smart phones, smart televisions (e.g., televisions connected to the Internet), set-top boxes, game consoles, security systems (including security cameras), vehicle on-board computers, network devices (e.g., routers, switches, modems), aerial vehicles, drones, or the like. In some examples, the remote units 102 include wearable devices, such as smart watches, fitness bands, optical head-mounted displays, or the like. Moreover, the remote units 102 may be referred to as subscriber units, mobiles, mobile stations, users, terminals, mobile terminals, fixed terminals, subscriber stations, UE, user terminals, a device, or by other terminology used in the art. The remote units 102 may communicate directly with one or more of the network units 104 via UL communication signals. The remote units 102 may communicate directly with other remote units 102 via sidelink communication.

The network units 104 may be distributed over a geographic region. In certain examples, a network unit 104 may also be referred to as an access point, an access terminal, a base, a base station, a Node-B, an eNB, a gNB, a Home Node-B, a relay node, a device, a core network, an aerial server, a radio access node, an AP, NR, a network entity, an Access and Mobility Management Function ("AMF"), a Unified Data Management Function ("UDM"), a Unified Data Repository ("UDR"), a UDM/UDR, a Policy Control Function ("PCF"), a Radio Access Network ("RAN"), an Network Slice Selection Function ("NSSF"), or by any other terminology used in the art. The network units 104 are generally part of a radio access network that includes one or more controllers communicably coupled to one or more corresponding network units 104. The radio access network is generally communicably coupled to one or more core networks, which may be coupled to other networks, like the Internet and public switched telephone networks, among other networks. These and other elements of radio access and core networks are not illustrated but are well known generally by those having ordinary skill in the art.

In one implementation, the wireless communication system 100 is compliant with New Radio (NR) protocols standardized in 3GPP, wherein the network unit 104 transmits using an Orthogonal Frequency Division Multiplexing ("OFDM") modulation scheme on the downlink (DL) and the remote units 102 transmit on the uplink (UL) using a Single Carrier Frequency Division Multiple Access ("SC-FDMA") scheme or an OFDM scheme. More generally, however, the wireless communication system 100 may implement some other open or proprietary communication protocol, for example, WiMAX, IEEE 802.11 variants, GSM, GPRS, UMTS, LTE variants, CDMA2000, Bluetooth^{®}, ZigBee, Sigfoxx, among other protocols. The present disclosure is not intended to be limited to the implementation of any particular wireless communication system architecture or protocol.

The network units 104 may serve a number of remote units 102 within a serving area, for example, a cell or a cell sector via a wireless communication link. The network units 104 transmit DL communication signals to serve the remote units 102 in the time, frequency, and/or spatial domain.

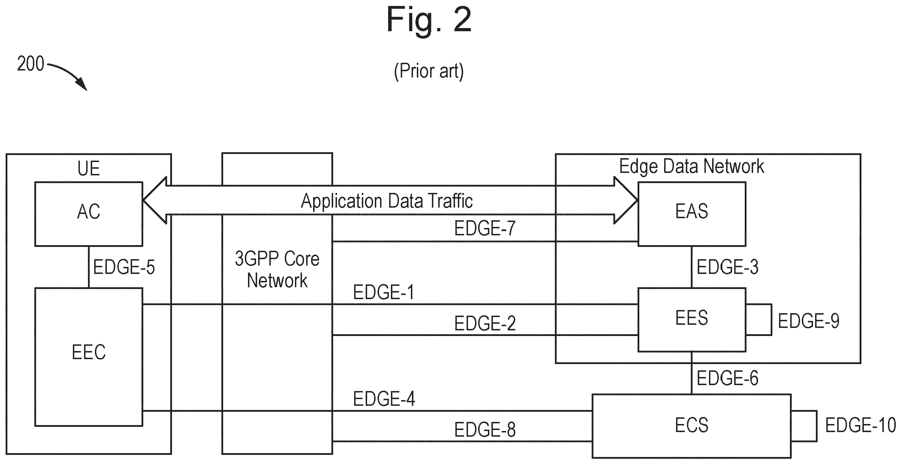

Figure 2 depicts an application layer functional model, and in particular an EDGEAPP architecture 200, for an edge enablement layer as outlined in 3GPP TS 23.558 v17.4.0.

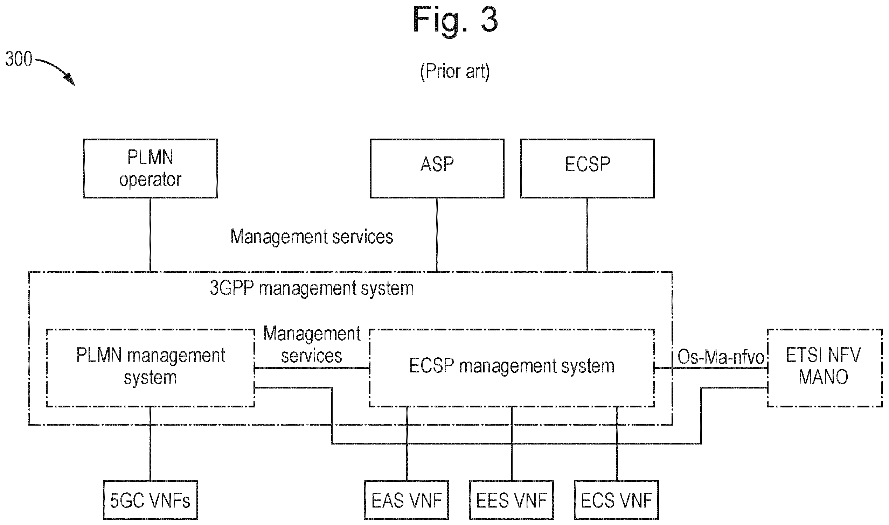

Figure 3 depicts an edge computing management framework 300 as outlined in 3GPP TS 28.538 v17.7.1.

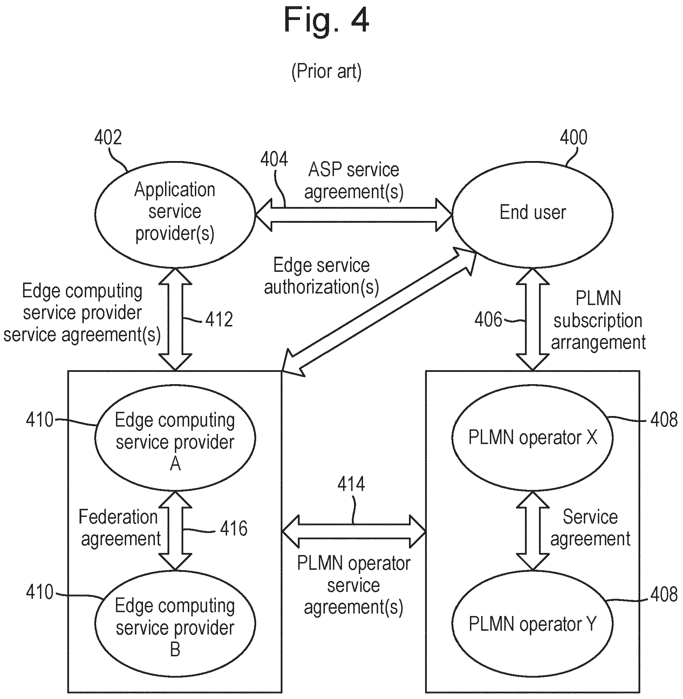

Based on 3GPP TR 23.700-98 v1.1.1, the relationships involved in edge computing services is shown in Figure 4.

Figure 4 depicts relationships involved in edge computing services during federation and roaming.

An end user 400 is a consumer of the applications provided by the ASP 402. The end user 400:
- may have an ASP service agreement 404 with one or more ASPs 402;
- has a PLMN subscription arrangement 406 with a PLMN operator 408, e.g. a Home Public Land Mobile Network (HPLMN). The user equipment apparatus used by the end user may register on the HPLMN network and a network of its roaming partners; and
- may have authorization to access edge services of one or more ECSPs 410.

The ASP 402 consumes the edge management services (e.g., infrastructure and/or platform services) provided by the ECSP 410 or the PLMN management service producer 408. The ASP 402 may have an edge computing service provider service agreement 412 with the one or more ECSPs 410.

The PLMN operator 408 provides connectivity between the end user 402 and the edge services provided by the ECSP 410. The PLMN operator 408:
- may have a PLMN operator service agreement 414 with the one or more ECSPs 410; and
- may have a service agreement for roaming including agreements for Edge Computing services, and/or federation with a single or multiple PLMN operators.

The one or more ECSPs 410 provides edge services and:
- may have service agreements 414 with one or more PLMN operators 408 to provide edge computing support; and
- may have a federation partnership /agreement 416 to share edge services with one or more ECSPs 410.

The ECSP(s) 410 and the PLMN operator(s) 408 belong to the same organization.

Multi-access edge computing (MEC) Federation is discussed in ETSI GR MEC035, which covers inter-MEC system coordination and can be defined as a federated model of MEC systems enabling shared usage of MEC services and applications.

In 3GPP, the federation corresponds to the shared usage of EES and/or EAS services and resources. Such federation in both MEC and EDGEAPP scenarios covers the coordination required among edge/cloud platforms for the following cases:
- edge node sharing;
- same edge service deployed in two or more platforms; and
- different edge services/applications deployed in different platforms but with a "partner" or "dependency" relationship.

In some federation scenarios, a change of the user equipment apparatus mapping to a different edge/cloud service area may lead to either service roaming (i.e., changing of an application server or EAS or MEC service), and/or network roaming (i.e., a change of the underlying network). The present disclosure addresses the service roaming aspects. The following aspects of federation are discussed with respect to edge services.

In the first case, a federated EAS service (using partner EAS in the EDNs of other ECSPs) is described: For the EAS to provide services (weather, transportation, maps, etc.) in partnership with other EASs, EAS context processing and federated EAS support may be required at edge-compatible layers. When Application Context Relocation (ACR) occurs due to user equipment apparatus mobility, a method of rearranging the federated EAS context may be required to provide continuous service of the federated EAS. In addition, there may be a need for a method for finding an EAS that provides a federated EAS service within the EDN in which the user equipment apparatus has moved.

In the second case, edge services spanning multiple ECSPs are described. According to 3GPP TR 23.700-98 v.1.1.1, an edge service or an EAS (e.g., a V2X server) can be provided via different EDNs deployed by different respective ECSPs. Each ECSP may not have the required infrastructure to install the EAS in every EDN due to financial, regulatory and operation constraints. It is assumed that a user equipment apparatus can access the same edge service provided by respective different EASs which are registered to respective different EESs and deployed by respective different ECSPs, which have a service level agreement to share edge services. These ECSPs can deploy EESs to serve different PLMNs or different coverages of a given PLMN. A typical example of such a scenario is depicted in Figure 4.6-1 of 3GPP TR 23.700-98 v.1.1.1.

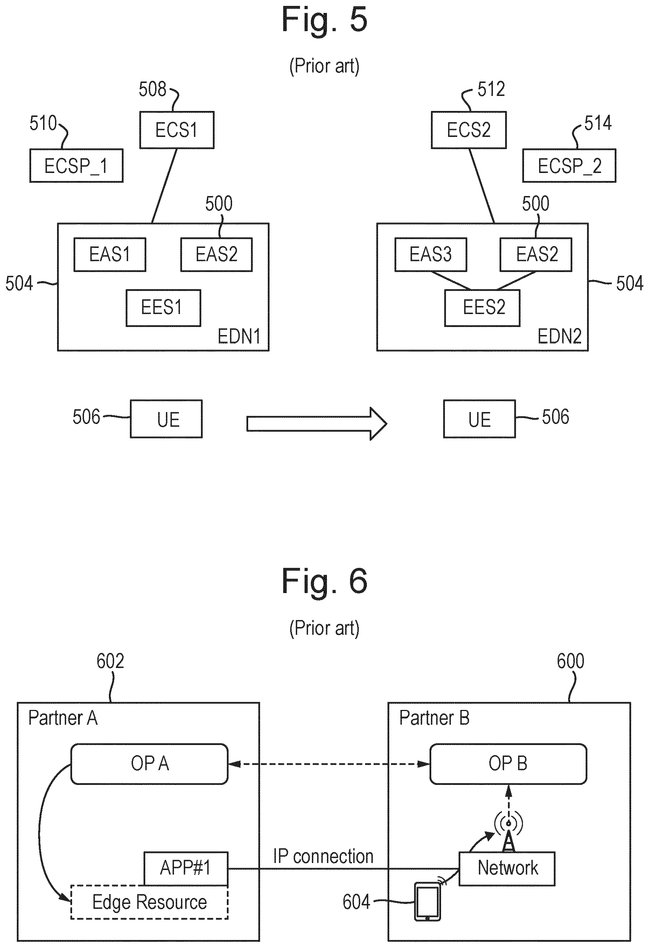

Figure 5 depicts an EAS deployed by different ECSPs, as described in 3GPP TR 23.700-98 v.1.1.1, in accordance with the second case.

A first EAS 500 resident in a first EDN 502 and a second EDN 504 provide the same service. A user equipment apparatus 506 may be configured with a first ECS configuration information 508 (e.g., if the user equipment apparatus 506 is a subscriber of a first ECSP 510). A second ECS configuration information 512, deployed by a second ECSP 514 (a partner of the first ECSP 510), may also be needed to be provisioned to the user equipment apparatus 506 when the apparatus is out of the service area of the second EAS 500 in the first ECSP 510 and cannot find a suitable EES within the first ECSP 510 to discover and connect to the first EAS 500. The same issue exists when the first EAS 500 becomes unavailable due to other reasons, e.g. overload, or in cases where the first ECSP 510 does not deploy the first EAS 500 at all, and instead relies on the partner second ECSP 514 to provide the edge service. Besides, the user equipment apparatus 506 may have already accessed the first EAS 500 in the first EDN 502 and is getting service from the first EAS 500. In that case, it is necessary to support service continuity due to user equipment apparatus mobility when the apparatus moves out of the service area of the first EAS 500 in the first EDN 502 and transfers, e.g. goes to, the service area of the first EAS 500 in the second EDN 504.

In a third case, edge node sharing across ECSPs is described. Following from, i.e. based on, OPG.02 CR1001 Operator Platform Telco Edge Requirements, the edge node sharing scenario has been identified in GSMA OPG.02 CR1001 Operator Platform Telco Edge Requirements, clause 3.3.5.

Figure 6 depicts this edge node sharing scenario between a first operator platform (OP) 600 and a second OP 602. In this example, OP may refer to the ECSP or other operator platform.

The first OP 600 deploys an application in the second OP 602 (i.e., the partner OP). The first OP 600 wants to scale its services for the region covered by the second OP 602 by using the edge infrastructure of the second OP 602.

In this example, a user (and user equipment apparatus 604) belongs to the first OP 600.

If the first OP 600 finds that the most suitable application for serving the user is available in the second OP 602 (the partner OP), then the first OP 600 requests the edge computing service from the second OP 602.

Given these considered scenarios, a user equipment apparatus may want to access edge services while roaming close to another ECSP that may provide similar services. It may be beneficial, e.g. in terms of cost or performance, for the user equipment apparatus to be connected to a close-by ECSP. However, it is currently not clear how the user equipment apparatus may be configured to connect to or use such services.

The above scenarios have in common that the application service extends to multiple ECSPs. This means that a management system in or from the ASP, ECSP or the PLMN must be able to manage (e.g., deploy and configure) the user equipment apparatus to be able to use a similar or equivalent application in another ECSP.

The present application presents a solution to this problem.

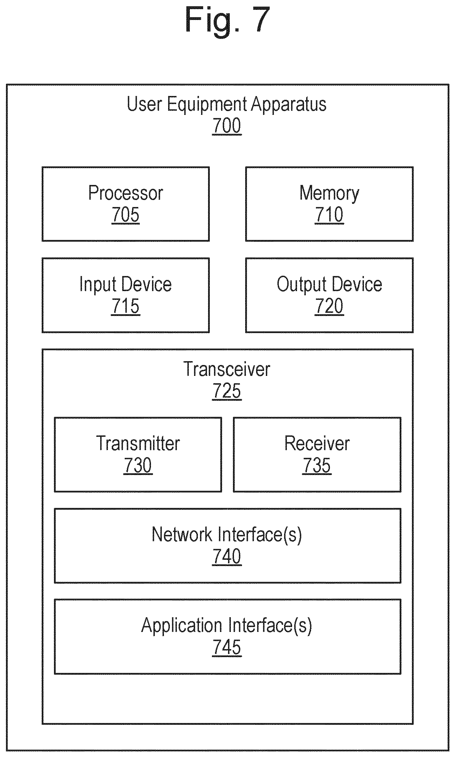

Figure 7 depicts a user equipment apparatus (UE) 700 that may be used for implementing the methods described herein. The UE 700 is used to implement one or more of the solutions described herein. The UE 700 is in accordance with one or more of the UEs described in embodiments herein. In particular, the UE 700 is in accordance with the UEs 506, 604 described above, and as such the reference numeral 700 is used hereinafter to indicate a UE in accordance with the UEs 506, 604. The UE 700 includes a processor 705, a memory 710, an input device 715, an output device 720, and a transceiver 725.

The input device 715 and the output device 720 may be combined into a single device, such as a touchscreen. In some implementations, the user equipment apparatus 700 does not include any input device 715 and/or output device 720. The user equipment apparatus 700 may include one or more of: the processor 705, the memory 710, and the transceiver 725, and may not include the input device 715 and/or the output device 720.

As depicted, the transceiver 725 includes at least one transmitter 730 and at least one receiver 735. The transceiver 725 may communicate with one or more cells (or wireless coverage areas) supported by one or more base units. The transceiver 725 may be operable on unlicensed spectrum. Moreover, the transceiver 725 may include multiple UE panels supporting one or more beams. Additionally, the transceiver 725 may support at least one network interface 740 and/or application interface 745. The application interface(s) 745 may support one or more APIs. The network interface(s) 740 may support 3GPP reference points, such as Uu, N1, PC5, etc. Other network interfaces 740 may be supported, as understood by one of ordinary skill in the art.

The processor 705 may include any known controller capable of executing computer-readable instructions and/or capable of performing logical operations. For example, the processor 705 may be a microcontroller, a microprocessor, a central processing unit ("CPU"), a graphics processing unit ("GPU"), an auxiliary processing unit, a field programmable gate array ("FPGA"), or similar programmable controller. The processor 705 may execute instructions stored in the memory 710 to perform the methods and routines described herein. The processor 705 is communicatively coupled to the memory 710, the input device 715, the output device 720, and the transceiver 725.

The processor 705 may control the user equipment apparatus 700 to implement the user equipment apparatus behaviors described herein. The processor 705 may include an application processor (also known as "main processor") which manages application-domain and operating system ("OS") functions and a baseband processor (also known as "baseband radio processor") which manages radio functions.

The memory 710 may be a computer readable storage medium. The memory 710 may include volatile computer storage media. For example, the memory 710 may include a RAM, including dynamic RAM ("DRAM"), synchronous dynamic RAM ("SDRAM"), and/or static RAM ("SRAM"). The memory 710 may include non-volatile computer storage media. For example, the memory 710 may include a hard disk drive, a flash memory, or any other suitable non-volatile computer storage device. The memory 710 may include both volatile and non-volatile computer storage media.

The memory 710 may store data related to implement a traffic category field as described herein. The memory 710 may also store program code and related data, such as an operating system or other controller algorithms operating on the apparatus 700.

The input device 715 may include any known computer input device including a touch panel, a button, a keyboard, a stylus, a microphone, or the like. The input device 715 may be integrated with the output device 720, for example, as a touchscreen or similar touch-sensitive display. The input device 715 may include a touchscreen such that text may be input using a virtual keyboard displayed on the touchscreen and/or by handwriting on the touchscreen. The input device 715 may include two or more different devices, such as a keyboard and a touch panel.

The output device 720 may be designed to output visual, audible, and/or haptic signals. The output device 720 may include an electronically controllable display or display device capable of outputting visual data to a user. For example, the output device 720 may include, but is not limited to, a Liquid Crystal Display ("LCD"), a Light-Emitting Diode ("LED") display, an Organic LED ("OLED") display, a projector, or similar display device capable of outputting images, text, or the like to a user. As another, non-limiting, example, the output device 720 may include a wearable display separate from, but communicatively coupled to, the rest of the user equipment apparatus 700, such as a smart watch, smart glasses, a heads-up display, or the like. Further, the output device 720 may be a component of a smart phone, a personal digital assistant, a television, a table computer, a notebook (laptop) computer, a personal computer, a vehicle dashboard, or the like.

The output device 720 may include one or more speakers for producing sound. For example, the output device 720 may produce an audible alert or notification (e.g., a beep or chime). The output device 720 may include one or more haptic devices for producing vibrations, motion, or other haptic feedback. All, or portions, of the output device 720 may be integrated with the input device 715. For example, the input device 715 and output device 720 may form a touchscreen or similar touch-sensitive display. The output device 720 may be located near the input device 715.

The transceiver 725 communicates with one or more network functions of a mobile communication network via one or more access networks. The transceiver 725 operates under the control of the processor 705 to transmit messages, data, and other signals and also to receive messages, data, and other signals. For example, the processor 705 may selectively activate the transceiver 725 (or portions thereof) at particular times in order to send and receive messages.

The transceiver 725 includes at least one transmitter 730 and at least one receiver 735. The one or more transmitters 730 may be used to provide uplink communication signals to a base unit of a wireless communications network. Similarly, the one or more receivers 735 may be used to receive downlink communication signals from the base unit. Although only one transmitter 730 and one receiver 735 are illustrated, the user equipment apparatus 700 may have any suitable number of transmitters 730 and receivers 735. Further, the transmitter(s) 730 and the receiver(s) 735 may be any suitable type of transmitters and receivers. The transceiver 725 may include a first transmitter/receiver pair used to communicate with a mobile communication network over licensed radio spectrum and a second transmitter/receiver pair used to communicate with a mobile communication network over unlicensed radio spectrum.

The first transmitter/receiver pair may be used to communicate with a mobile communication network over licensed radio spectrum and the second transmitter/receiver pair used to communicate with a mobile communication network over unlicensed radio spectrum may be combined into a single transceiver unit, for example a single chip performing functions for use with both licensed and unlicensed radio spectrum. The first transmitter/receiver pair and the second transmitter/receiver pair may share one or more hardware components. For example, certain transceivers 725, transmitters 730, and receivers 735 may be implemented as physically separate components that access a shared hardware resource and/or software resource, such as for example, the network interface 740.

One or more transmitters 730 and/or one or more receivers 735 may be implemented and/or integrated into a single hardware component, such as a multi-transceiver chip, a system-on-a-chip, an Application-Specific Integrated Circuit ("ASIC"), or other type of hardware component. One or more transmitters 730 and/or one or more receivers 735 may be implemented and/or integrated into a multi-chip module. Other components such as the network interface 740 or other hardware components /circuits may be integrated with any number of transmitters 730 and/or receivers 735 into a single chip. The transmitters 730 and receivers 735 may be logically configured as a transceiver 725 that uses one more common control signals or as modular transmitters 730 and receivers 735 implemented in the same hardware chip or in a multi-chip module.

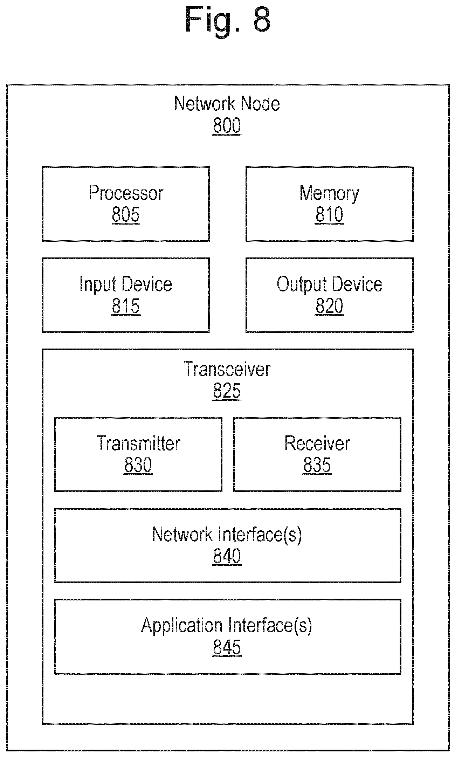

Figure 8 depicts details of a network node 800 that may be used for implementing the methods described herein. The network node 800 may be one implementation of an entity in the wireless communications network, e.g. in one or more of the networks described herein. The network node 800 may be, for example, the UE 700 described above, or a NF or application function (AF), or another entity, of one or more of the networks of embodiments described herein. The network node 800 includes a processor 805, a memory 810, an input device 815, an output device 820, and a transceiver 825.

The input device 815 and the output device 820 may be combined into a single device, such as a touchscreen. In some implementations, the network node 800 does not include any input device 815 and/or output device 820. The network node 800 may include one or more of: the processor 805, the memory 810, and the transceiver 825, and may not include the input device 815 and/or the output device 820.

As depicted, the transceiver 825 includes at least one transmitter 830 and at least one receiver 835. Here, the transceiver 825 communicates with one or more remote units 200. Additionally, the transceiver 825 may support at least one network interface 840 and/or application interface 845. The application interface(s) 845 may support one or more APIs. The network interface(s) 840 may support 3GPP reference points, such as Uu, N1, N2 and N3. Other network interfaces 840 may be supported, as understood by one of ordinary skill in the art.

The processor 805 may include any known controller capable of executing computer-readable instructions and/or capable of performing logical operations. For example, the processor 805 may be a microcontroller, a microprocessor, a CPU, a GPU, an auxiliary processing unit, a FPGA, or similar programmable controller. The processor 805 may execute instructions stored in the memory 810 to perform the methods and routines described herein. The processor 805 is communicatively coupled to the memory 810, the input device 815, the output device 820, and the transceiver 825.

The memory 810 may be a computer readable storage medium. The memory 810 may include volatile computer storage media. For example, the memory 810 may include a RAM, including dynamic RAM ("DRAM"), synchronous dynamic RAM ("SDRAM"), and/or static RAM ("SRAM"). The memory 810 may include non-volatile computer storage media. For example, the memory 810 may include a hard disk drive, a flash memory, or any other suitable non-volatile computer storage device. The memory 810 may include both volatile and non-volatile computer storage media.

The memory 810 may store data related to establishing a multipath unicast link and/or mobile operation. For example, the memory 810 may store parameters, configurations, resource assignments, policies, and the like, as described herein. The memory 810 may also store program code and related data, such as an operating system or other controller algorithms operating on the network node 800.

The input device 815 may include any known computer input device including a touch panel, a button, a keyboard, a stylus, a microphone, or the like. The input device 815 may be integrated with the output device 820, for example, as a touchscreen or similar touch-sensitive display. The input device 815 may include a touchscreen such that text may be input using a virtual keyboard displayed on the touchscreen and/or by handwriting on the touchscreen. The input device 815 may include two or more different devices, such as a keyboard and a touch panel.

The output device 820 may be designed to output visual, audible, and/or haptic signals. The output device 820 may include an electronically controllable display or display device capable of outputting visual data to a user. For example, the output device 820 may include, but is not limited to, an LCD display, an LED display, an OLED display, a projector, or similar display device capable of outputting images, text, or the like to a user. As another, non-limiting, example, the output device 820 may include a wearable display separate from, but communicatively coupled to, the rest of the network node 800, such as a smart watch, smart glasses, a heads-up display, or the like. Further, the output device 820 may be a component of a smart phone, a personal digital assistant, a television, a table computer, a notebook (laptop) computer, a personal computer, a vehicle dashboard, or the like.

The output device 820 may include one or more speakers for producing sound. For example, the output device 820 may produce an audible alert or notification (e.g., a beep or chime). The output device 820 may include one or more haptic devices for producing vibrations, motion, or other haptic feedback. All, or portions, of the output device 820 may be integrated with the input device 815. For example, the input device 815 and output device 820 may form a touchscreen or similar touch-sensitive display. The output device 820 may be located near the input device 815.

The transceiver 825 includes at least one transmitter 830 and at least one receiver 835. The one or more transmitters 830 may be used to communicate with the UE, as described herein. Similarly, the one or more receivers 835 may be used to communicate with network functions in the PLMN and/or RAN, as described herein. Although only one transmitter 830 and one receiver 835 are illustrated, the network node 800 may have any suitable number of transmitters 830 and receivers 835. Further, the transmitter(s) 830 and the receiver(s) 835 may be any suitable type of transmitters and receivers.

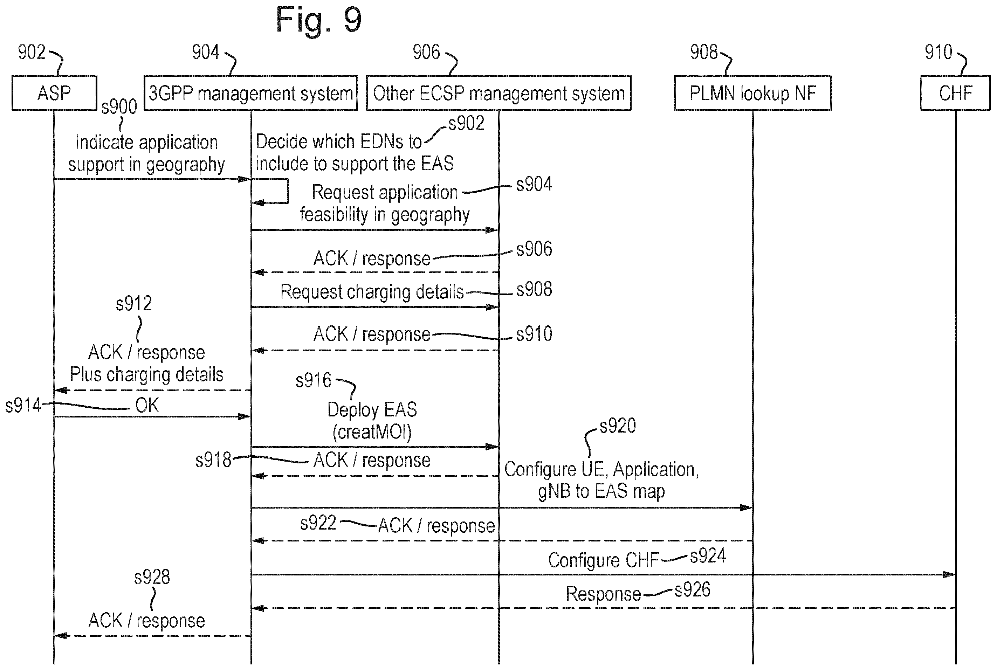

Figure 9 depicts a procedure 900 for configuring/selecting and provisioning edge services to a user in a wireless network. An architecture for carrying out the procedure 900 includes an ASP 902, a 3GPP management system 904 (e.g., a PLMN or an ECSP), a further ECSP management system 906, a PLMN lookup NF 908, and a charging function (CHF) 910.

In the existing SA2 arrangement described in 3GPP TS 23.558 v17.4.0, there is no mention of how the provisioning edge services to a user may be supported by a core network.

In 3GPP, the UE may provide application layer information on where it is located. This information could be used at the application level to select the EAS. In embodiments of the present invention, selection of the EAS may be performed at the network level, wherein based on the network level information of the UE the EAS is selected. (The "network level" or "network plane" may refer to user plane, control plane, or management plane in the context of this disclosure.) This may be implemented, for example, when there is no application layer information provided. For example, if a request at the application layer does not contain the UE location information, the first ECS may interact with the 3GPP core network to retrieve the UE location (as described in more detail in TR23.700-98).

The PLMN lookup NF 908 could be any NF in the control plane, for example an Application Management Function (AMF), a Session Management Function (SMF), or a Policy Control Function (PCF). A UE used by a user in the corresponding network has two options. Firstly, on registration it may be directed by the lookup NF 908 to use the correct EAS in the correct EDN. Alternatively, where it requests an EAS but provides no geographic information, the lookup NF 908 may redirect the request to the EAS in the correct EDN.

At step s900, the ASP 902 requests that the 3GPP management system 904 (e.g., in a PLMN or an ECSP) provide EAS support for one or more services in certain given geographies. This may include requesting that the 3GPP management system 904 indicate whether EAS is supported in the given geographies.

At step s902, a management service in the management system 904 decides or determines which EDNs to use based on the given (requested) geographies, i.e. geographic coverage.

At step s904, the 3GPP management system 904 contacts the management system(s) 906 of the corresponding ECSP(s) to request an indication as to the feasibility of providing the one or more services (e.g., by deploying an application) in their EDNs. Optionally reservation for those feasibility requests could be requested. For example, the 3GPP management system 904 may provide, to the management system(s) 906 of the corresponding other ECSP(s), a timeout value specifying a time for which the requested resources (required to make the provision of one or more services feasible) should be reserved.

At step s906, the 3GPP management system 904 receives a response from the other management system(s) 906 indicating whether the requested service provision is feasible and if the resource reservation, if requested, has been successful/possible.

Optionally, at step s908, the 3GPP management system 904 may request pricing/charging details for the reservation of resources for the one or more services in each ECSP having the management system(s) 906.

Optionally, at step s910, the 3GPP management system 904 may receive from the management system(s) 906 the respective pricing details. These details may later be used to configure a charging system in the PLMN/ECSP.

Optionally, at step s912, a response indicating a successful feasibility check and corresponding pricing details may be provided by the 3GPP management system 904 to the ASP 902.

Optionally, at step s914, the ASP 902 may indicate that, or whether, it accepts or agrees with the indicated feasibility and the pricing model received.

At step s916, a createMoi management service (as described in 3GPP TS 28.532 v16.4.0) is used to deploy the EAS in a respective EDN of the corresponding ECSPs. Internally, a managed network service (MnS) producer may use a virtualization system (NFV or container-based) to deploy the EAS.

At step s918, a response indicating success or failure of EAS deployment is returned to the 3GPP management system 904 by the management system(s) 906. In the case of success, the list of EASs and their respective geographic adjacencies (e.g., their latency, and/or geographical coordinates, and/or service reliability, and/or bandwidth information) to various known points in the network may be provided.

Based on the deployed EAS, at step s920, a mapping system is provisioned by the 3GPP management system 904 to a relevant 3GPP NF, i.e. the PLMN lookup NF 908. The mapping system maps a given UE edge service request to a given EAS. This can be done, for example, by mapping the UE-access Next Generation NodeB (gNB) to certain EASs in the system, and/or by mapping the UE application to the EASs of an appropriate EDN based on the received adjacencies (e.g., any geographical, or latency, or reliability, or bandwidth information). The mapping system may also consider gNB-to-EAS latencies and load balancing amongst the EASs when performing such a mapping. The lookup NF 908 in which such a mapping system may be provisioned may be any control or user plane or management plane function, as defined by 3GPP, e.g. an AMF, an SMF, UPF, MDAF or a PCF.

At step s922, a response indicating the success (or failure) of the configuration at s920 is returned to the 3GPP management system 904.

Based on this mapping, and the agreed-upon pricing model at steps s912-s914 (or based on, for example, a pre-decided charging plan if steps s912-s914 are not conducted), at step s924 the CHF 910 in the PLMN/ECSP (to which PLMN/ESCP the 3GPP management system 904 belongs) is configured accordingly.

At step s926, a response indicating the success (or failure) of the configuration of the CHF 910 at step s924 is returned to the 3GPP management system 904 by the CHF 910.

Optionally, at step s928, a response indicating the success (or failure) of the configuration of the CHF 910 at step s924 may be returned to (e.g., forwarded to) the ASP 902.

Thus, a procedure 900 for configuring/selecting and provisioning edge services to a (e.g., roaming) user in a wireless network is provided.

In an embodiment, there is provided management system in a mobile network. The management system may be in accordance with management system 904 described in more detail earlier above with reference to Figure 9. The management system comprises one or more processors arranged to receive, for example from an ASP 902, a request to provide an Edge Service. The request indicates a geography in which the Edge Service is to be provided. Any appropriate way of indicating, identifying and/or delimiting a geography may be implemented, including but not limited those covered by or described in any 3GPP standard specification or ETSI standard specification. The one or more processors of the management system are further arranged to identify at least one Edge Data Network, EDN, to use to provide the requested Edge Service based on at least a part of the indicated geography; and request, or cause, (for example, to a remote ECSP or management system of a remote ECSP) deployment of an Edge Application Server, EAS, in the identified EDN to provide the requested Edge Service in the specified geography.

The one or more processors may be arranged to, responsive to identifying the EDN, send (for example, to a remote Edge Computing Service Provider, ECSP, associated with the EDN) a request for a feasibility of deploying the EAS in the EDN. The one or more processors may be arranged to receive (for example, from the remote ECSP) a response indicating the feasibility of deploying the EAS in the EDN. Optionally, the one or more processors may be arranged to send (for example, to an ASP/entity from which the request to provide an Edge Service was received) an indication as to whether the deployment of the EAS in the EDN is feasible. The request for deployment or configuration of the EAS in the identified EDN may be made in response to receiving an indication that the deploying the EAS in the EDN is feasible. For example, in some embodiments, the request for deployment or configuration is made only if such a deployment or configuration is feasible. In some embodiments, if the received indication indicates that the deployment of the EAS in the EDN is not feasible, the request (or causing) the deployment or configuration of the EAS in the identified EDN is not made.

The one or more processors may be arranged to, responsive to identifying the EDN, send (for example, to the remote Edge Computing Service Provider, ECSP, associated with the EDN) a request to reserve resources for deploying the EAS in the EDN. The one or more processors may be arranged to receive (for example, from the remote ECSP) a response indicating whether the requested resources have been reserved. The one or more processors may be arranged to receive (for example, from the remote ESCP) a timeout value specifying a time for which the requested resources should be reserved.

The one or more processors may be arranged to, responsive to identifying the EDN, send (for example, to a remote Edge Computing Service Provider, ECSP, associated with the EDN) a request for pricing details for deploying the EAS in the EDN. The one or more processors may be arranged to receive (for example, from the remote ECSP) the requested pricing details for deploying the EAS in the EDN. The one or more processors may be arranged to send (for example, to an ASP/entity from which the request to provide an Edge Service was received). The one or more processors may be arranged to receive (for example, from the ASP/entity from which the request to provide an Edge Service was received) an indication as to whether the pricing details are accepted.

The one or more processors may be arranged to request, or cause, deployment of the EAS in the identified EDN to provide the requested Edge Service in the indicated geography using the createMOI operation defined in TS 28.532. The one or more processors may be arranged to request deployment of the EAS in the identified EDN to provide the requested Edge Service in the indicated geography using a virtualisation system, Network Function Virtualization, NFV, or container base.

The one or more processors may be arranged to receive (for example, from a remote Edge Computing Service Provider, ECSP, associated with the EDN) an indication as to whether the deployment of the EAS in the EDN has been successful. The one or more processors may be arranged to, if the deployment of the EAS in the EDN has been successful, receive (for example, from the remote ECSP) an indication of, such as a list comprising, the EAS and a geographical adjacency, with respect to one or more known points in the mobile network, associated with the EAS. This may indicate a geographical adjacency to one or more known points in the EDN/network, e.g. to other/neighbouring EASs or EDNs, in terms of geographical location (e.g., geographical coordinates), and/or RTT delay, and/or jitter, and/or reliability of connection).

The one or more processors may be arranged to provision a mapping system in a network function, NF, of the mobile network, the mapping system mapping a user equipment to the EAS. The mapping system may be provisioned responsive to the successful deployment of the EAS in the EDN. The mapping system may map the UE request to an EAS in an EDN based on a geographical location of the user equipment (e.g., satisfying one or more criteria of the edge service). The NF may be any control or user plane or management plane function as defined by 3GPP example, AMF, SMF, PCF.

The one or more processors may be arranged to provision the mapping system, which maps the user equipment and/or an application thereof application of to the EDN. This mapping may be performed by one or more of the following:
- mapping a gNB used by the user equipment to the EDN; and/or
- mapping geographical or latency or reliability or bandwidth information associated with the UE to the EDN; and/or
- mapping any other characteristic of the UE to an EDN that optimizes the performance of the Edge Service.

The mapping system may take into account gNB (i.e. the access gNB of the UE) to EAS latencies and/or load balancing amongst the EASs to perform the mapping(s).

The management system may be that of an Edge Computing Service Provider, ECSP, or a Public Land Mobile Network, PLMN.

The request to provide an Edge Service may be received from an Application Service Provider, ASP, in the mobile network.

The indicated geography may define one or more geographies or service areas in the mobile network. The indicated geography may define one or more of the following: one or more geographical areas; one or more topological areas, which may be defined by a list of cells; one or more edge service areas; one or more cloud service areas; one or more tracking areas; one or more identifiers indicating a geographical area; and/or one or more or sub-areas of one or more edge or cloud service areas. The sub-areas may be defined by edge platform coverage or the edge service area.

The EAS which is deployed in the EDN may be selected dependent on its compatibility with software in the EDN. Thus, the management system can, given a geographic area, select a combination of EDNs such that that geographic area is covered. In addition, the management system can map other characteristics for selecting the EDN, such as, but not limited to, software compatibility, and/or reliability.

The EAS may be deployed across one or more (e.g. multiple) ECSPs, one or more (e.g. multiple) edge platforms, one or more (e.g. multiple) cloud platforms, or any combination thereof.

The EAS may be an edge enablement service, or a Multi-access Edge Computing, MEC, service, or a MEC app.

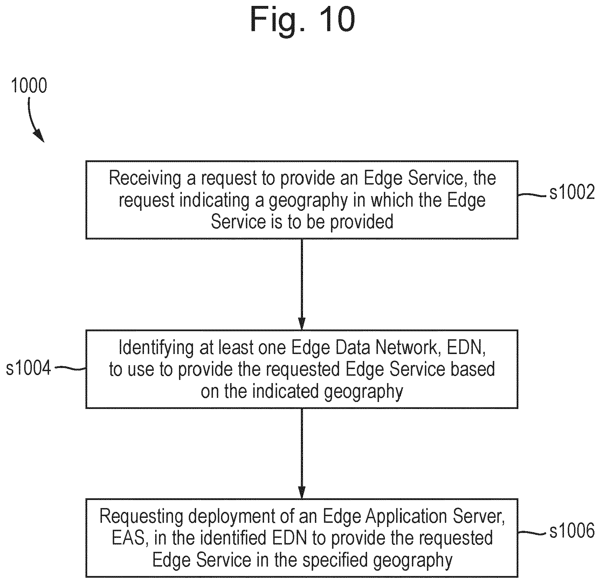

In an embodiment there is provided a method performed by a management system of a mobile network. Figure 10 is a process flow chart showing certain steps of this embodiment. The method comprises the following steps.

At s1002, a management system in a mobile network. receives a request to provide an Edge Service, the request indicating a geography in which the Edge Service is to be provided. The management system may be in accordance with management system 904 described in more detail earlier above with reference to Figure 9.

At s1004, the management system identifies at least one Edge Data Network, EDN, to use to provide the requested Edge Service based on the indicated geography.

At s1006, the management system requests or causes deployment of an Edge Application Server, EAS, in the identified EDN to provide the requested Edge Service in the specified geography.

The management system may be that of an Edge Computing Service Provider, ECSP, or a Public Land Mobile Network, PLMN. The request to provide the Edge Service may be received from an Application Service Provider, ASP, in the mobile network. The request for deployment of the EAS may be sent to a remote Edge Computing Service Provider, ECSP, associated with the EDN.

The specified or indicated geography may define one or more of the following:

one or more geographical areas; one or more topological areas, which may be defined by a list of cells; one or more edge service areas; one or more cloud service areas; one or more tracking areas; one or more identifiers indicating a geographical area; and/or one or more or sub-areas of one or more edge or cloud service areas. The sub-areas may be defined by edge platform coverage or the edge service area.

In a further embodiment, there is provided an apparatus in a mobile network, the apparatus comprising one or more processors arranged to: receive a request to provide an Edge Service, the request indicating a geography in which the Edge Service is to be provided; and identify at least one Edge Data Network, EDN, to use to provide or support the requested Edge Service based on (i.e. in or covering) at least a part of the indicated geography.

The apparatus may compile a list of the identified one or more EDNs for providing or supporting the Edge Service in the indicated geography. Selection or identification of the one or more EDNs may be further based on software compatibility, reliability, and/or one or more other selection criteria.

A novel aspect to the methods and apparatuses disclosed herein is the ability of the ASP to support edge services in a given geography. In addition, it may be the case that only a part of the geography indicated/ specified in the request by the ASP is covered by the PLMN/ECSP that receives the ASP request, i.e. by the PLMN/ECSP having the management system 904 in the above embodiments.

According to the methods and apparatuses disclosed herein, a mapping system to configure a UE to select desired EASs corresponding to an appropriate/optimal ECSP is provided. Advantageously, this tends to provide a solution to the problem of how to configure a UE to best use an edge service or best serve a UE request for an edge service in a cost- and performance-efficient manner.

Furthermore, in the methods and apparatuses disclosed herein, mapping of the gNB to the ECSP is configured in the control plane. Advantageously, a need for the UE to provide geographic information in the application level to receive the best latency edge service tends to be avoided.

Advantageously, the embodiments described herein tend to provide for internal management of load balancing between the EAS, for example, by dynamically mapping the UE request to the load of an EAS.

Advantageously, the embodiments described herein support dynamism. More specifically, the mapping of the gNB to the ECSP could be re-configured, e.g. in the case of any performance parameters of the EAS changing. The UE may not be aware of any failure in particular instances of the EAS.

In an embodiment, there is provided a method to support edge service provisioning based on a request for supporting multiple geographies or service areas, including either geographical area or topological area (e.g., a list of cells, tracking areas, etc.), or edge/cloud service area or sub-area (defined by an edge platform coverage or an edge service area).

A suitability of an EAS in each EDN for service provisioning may be dependent on various factors, such as compatibility with the EDN software.

The EAS may be deployed across multiple ECSPs, multiple edge platforms or cloud platform, or any combination thereof.

The EAS may be an edge enablement service, or an MEC service, or an MEC application.

The method may include performing a feasibility check across multiple ECSPs for deploying the EAS on certain EDNs.

The method may include configuring a mapping between (e.g., from) a UE (or an application in the UE) and (e.g., to) the EAS in a control plane NF.

It should be noted that the above-mentioned methods and apparatus illustrate rather than limit the invention, and that those skilled in the art will be able to design many alternative arrangements without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

Further, while examples have been given in the context of particular communications standards, these examples are not intended to be the limit of the communications standards to which the disclosed method and apparatus may be applied. For example, while specific examples have been given in the context of 3GPP, the principles disclosed herein can also be applied to another wireless communications system, and indeed any communications system which uses routing rules.

The method may also be embodied in a set of instructions, stored on a computer readable medium, which when loaded into a computer processor, Digital Signal Processor (DSP) or similar, causes the processor to carry out the hereinbefore described methods.

The described methods and apparatus may be practiced in other specific forms. The described methods and apparatus are to be considered in all respects only as illustrative and not restrictive. The scope of the invention is, therefore, indicated by the appended claims rather than by the foregoing description.

The following abbreviations are used herein, and/or are known terms useful to the skilled person in understanding the methods and apparatuses disclosed herein:
3GPP - 3rd Generation Partnership Project
ICT - Information and Communications Technology
ASP - Application Service Provider
HPLMN - Home Public Land Mobile Network
ECSP - Edge Computing Service Provider
ACR - Application Context Relocation
EAS - Edge Application Server
EDN - Edge Data Network
EES - Edge Enabler Server
ECS - Edge Configuration Server
OP - Operator's Platform
CSP - Cloud Service Provider
CEF - Charging Enablement Function
CHF - Charging Function
CDR - Charging Data Record
CDF - Charging Data Function
CGF - Charging Gateway Function
BD - Billing Domain
CTF - Charging Trigger Function
FCCSP - federation charging coordination service producer
LCM - Lifecycle Management
FCCSC - federation charging coordination service consumer
S- or T-EES - source or target EES
DNN - Data Network Name
DNAI - Data Network Access Identifier

## Claims

1. A management system (904, 800) for provisioning edge services in a federated deployment of wireless communications networks which share usage of Edge Application Server, EAS, services and resources in which a federated EAS service is deployable across plural edge platforms, the management system (904, 800) comprising one or more processors (805) arranged to:
receive (s1002) a request to provide an edge service, the request indicating a geography in which the edge service is to be provided;
identify (s1004) at least one Edge Data Network, EDN, to use to provide the requested edge service based on at least a part of the indicated geography; and
request (s1006) deployment or configuration of at least one EAS in the at least one EDN to provide the requested edge service in the indicated geography.

2. The management system (904, 800) of claim 1, wherein the one or more processors (805) are further arranged to:
responsive to identifying the EDN, send a request for a feasibility of deploying the EAS in the EDN;
receive a response indicating the feasibility of deploying the EAS in the EDN; and
send an indication as to whether the deployment or configuration of the EAS in the EDN is feasible; wherein
the request for deployment or configuration is made in response to receiving an indication that the deploying the EAS in the EDN is feasible.

3. The management system (904, 800) of claim 1 or 2, wherein the one or more processors (805) are further arranged to:
responsive to identifying the EDN, send a request to reserve resources for deploying the EAS in the EDN; and
optionally, receive a response indicating whether the requested resources have been reserved.

4. The management system (904, 800) of any of claims 1 to 3, wherein the one or more processors (805) are further arranged to:
responsive to identifying the EDN, send a request for pricing details for deploying the EAS in the EDN; and
receive the requested pricing details for deploying the EAS in the EDN.

5. The management system (904, 800) of claim 4, wherein the one or more processors (805) are further arranged to:
send the received pricing details; and
optionally, receive an indication as to whether the pricing details are accepted.

6. The management system (904, 800) of any of claims 1 to 5, wherein the one or more processors (805) are arranged to:
request configuration of the EAS in the identified EDN to provide the requested edge service in the indicated geography using a createMOI operation defined in TS 28.532 v16.4.0; or
request deployment of the EAS in the identified EDN to provide the requested edge service in the indicated geography using a virtualisation system, Network Function Virtualization, NFV, or container base.

7. The management system (904, 800) of any of claims 1 to 6, wherein the one or more processors (805) are further arranged to:
receive an indication as to whether the deployment of the EAS in the EDN has been successful; and
if the deployment of the EAS in the EDN has been successful, optionally receive an indication of the EAS and a geographical adjacency, with respect to one or more known points in a mobile network, associated with the EAS.

8. The management system (904, 800) of any of claims 1 to 7, wherein the one or more processors (805) are further arranged to:
provision a mapping system in a network function, NF, of a mobile network, the mapping system mapping a user equipment to the EAS.

9. The management system (904, 800) of claim 8, wherein the one or more processors (805) are arranged to provision the mapping system, which maps the user equipment to the EDN, by one or more of:
mapping a gNB used by the user equipment to the EDN; or
mapping geographical or latency or reliability or bandwidth information associated with the user equipment to the EDN.

10. The management system (904, 800) of any of claims 1 to 9, wherein the management system (904, 800) is a management system of an Edge Computing Service Provider, ECSP, or a Public Land Mobile Network, PLMN.

11. The management system (904, 800) of any of claims 1 to 10, wherein the request to provide an edge service is received from an Application Service Provider, ASP, in a mobile network.

12. The management system (904, 800) of any of claims 1 to 11, wherein the indicated geography defines one or more geographies or service areas in a mobile network.

13. The management system (904, 800) of claim 12, wherein the indicated geography defines one or more of the following:
one or more geographical areas;
one or more topological areas;
one or more edge service areas;
one or more cloud service areas;
one or more tracking areas; or
one or more identifiers indicating a geographical area; or
one or more or sub-areas of one or more edge or cloud service areas.

14. The management system (904, 800) of any of claims 1 to 13, wherein the EAS which is deployed in the EDN is selected dependent on its compatibility with software in the EDN.

15. A method performed by a management system (904, 800) for provisioning edge services in a federated deployment of wireless communications networks which share usage of Edge Application Server, EAS, services and resources in which a federated EAS service is deployable across plural edge platforms, the method comprising:
receiving (s1002) a request to provide an edge service, the request indicating a geography in which the edge service is to be provided;
identifying (s1004) at least one Edge Data Network, EDN, to use to provide the requested edge service based on at least a part of the indicated geography; and
requesting (s1006) deployment or configuration of at least one EAS in the at least one EDN to provide the requested edge service in the indicated geography.

## Patentansprüche

1. Managementsystem (904, 800) zur Bereitstellung von Edge-Diensten bei einem föderierten Einsatz von drahtlosen Kommunikationsnetzwerken, die eine Nutzung von Edge-Anwendungsserver-Diensten und -Ressourcen, EAS-Diensten und -Ressourcen) teilen, in denen ein föderierter EAS-Dienst über mehrere Edge-Plattformen einsetzbar ist, wobei das Managementsystem (904, 800) einen oder mehrere Prozessoren (805) umfasst, die eingerichtet sind zum:
Empfangen (s1002) einer Anfrage zum Bereitstellen eines Edge-Dienstes, wobei die Anfrage eine Geografie angibt, in der der Edge-Dienst bereitzustellen ist;
Identifizieren (s1004) mindestens eines Edge-Datennetzwerks, EDN, das zum Bereitstellen des angefragten Edge-Dienstes zu verwenden ist, zumindest zum Teil auf der Basis der angegebenen Geografie; und
Anfragen (s1006) eines Einsatzes oder einer Konfiguration mindestens eines EAS in dem mindestens einen EDN, um den angefragten Edge-Dienst in der angegebenen Geografie bereitzustellen.

2. Managementsystem (904, 800) nach Anspruch 1, wobei der eine oder die mehreren Prozessoren (805) ferner eingerichtet sind zum:
als Reaktion auf das Identifizieren des EDN Senden einer Anfrage nach einer Durchführbarkeit eines Einsetzens des EAS in dem EDN;
Empfangen einer Antwort, die die Durchführbarkeit eines Einsetzens des EAS in dem EDN angibt; und
Senden einer Angabe dazu, ob der Einsatz oder die Konfiguration des EAS in dem EDN durchführbar ist; wobei
die Anfrage zum Einsatz oder zur Konfiguration als Reaktion auf ein Empfangen einer Anabe, dass das Einsetzen des EAS in dem EDN durchführbar ist, vorgenommen wird.

3. Managementsystem (904, 800) nach Anspruch 1 oder 2, wobei der eine oder die mehreren Prozessoren (805) ferner eingerichtet sind zum:
als Reaktion auf das Identifizieren des EDN Senden einer Anfrage zum Reservieren von Ressourcen zum Einsetzen des EAS in dem EDN; und
optional Empfangen einer Antwort, die angibt, ob die angefragten Ressourcen reserviert wurden.

4. Managementsystem (904, 800) nach einem der Ansprüche 1 bis 3, wobei der eine oder die mehreren Prozessoren (805) ferner eingerichtet sind zum:
als Reaktion auf das Identifizieren des EDN Senden einer Anfrage nach Preisdetails zum Einsetzen des EAS in dem EDN; und
Empfangen der angefragten Preisdetails zum Einsetzen des EAS in dem EDN.

5. Managementsystem (904, 800) nach Anspruch 4, wobei der eine oder die mehreren Prozessoren (805) ferner eingerichtet sind zum:
Senden der empfangenen Preisdetails; und
optional Empfangen einer Angabe dazu, ob die Preisdetails akzeptiert werden.

6. Managementsystem (904, 800) nach einem der Ansprüche 1 bis 5, wobei der eine oder die mehreren Prozessoren (805) eingerichtet sind zum:
Anfragen einer Konfiguration des EAS in dem identifizierten EDN, um den angefragten Edge-Dienst in der angegebenen Geografie unter Verwendung einer in TS 28.532 v16.4.0 definierten createMOI-Operation bereitzustellen; oder
Anfragen eines Einsatzes des EAS in dem identifizierten EDN, um den angefragten Edge-Dienst in der angegebenen Geografie unter Verwendung eines Virtualisierungssystems, einer Virtualisierung von Netzwerkfunktionen (NFV) oder einer Container Base bereitzustellen.

7. Managementsystem (904, 800) nach einem der Ansprüche 1 bis 6, wobei der eine oder die mehreren Prozessoren (805) ferner eingerichtet sind zum:
Empfangen einer Angabe dazu, ob der Einsatz des EAS in dem EDN erfolgreich war; und
wenn der Einsatz des EAS in dem EDN erfolgreich war, optional Empfangen einer Angabe des EAS und einer geografischen Nähe in Bezug auf einen oder mehrere bekannte Punkte in einem Mobilfunknetzwerk, das mit dem EAS assoziiert ist.

8. Managementsystem (904, 800) nach einem der Ansprüche 1 bis 7, wobei der eine oder die mehreren Prozessoren (805) ferner eingerichtet sind zum:
Bereitstellen eines Abbildungssystems in einer Netzwerkfunktion, NF, eines Mobilfunknetzwerks, wobei das Abbildungssystem ein Teilnehmergerät auf den EAS abbildet.

9. Managementsystem (904, 800) nach Anspruch 8, wobei der eine oder die mehreren Prozessoren (805) dazu eingerichtet sind, das Abbildungssystem, das das Teilnehmergerät auf das EDN abbildet, durch eines oder mehrere der folgenden bereitzustellen:
Abbilden eines gNB, der von dem Teilnehmergerät verwendet wird, auf das EDN; oder
Abbilden von geografischen oder Latenz- oder Zuverlässigkeits- oder Bandbreiteninformationen, die mit dem Teilnehmergerät assoziiert sind, auf das EDN.

10. Managementsystem (904, 800) nach einem der Ansprüche 1 bis 9, wobei das Managementsystem (904, 800) ein Managementsystem eines Edge-Computing-Dienstanbieters, ECSP, oder eines öffentlichen terrestrischen Mobilfunknetzwerks, PLMN, ist.

11. Managementsystem (904, 800) nach einem der Ansprüche 1 bis 10, wobei die Anfrage zum Bereitstellen eines Edge-Dienstes von einem Anwendungsdienstanbieter, ASP, in einem Mobilfunknetzwerk empfangen wird.

12. Managementsystem (904, 800) nach einem der Ansprüche 1 bis 11, wobei die angegebene Geografie eine oder mehrere Geografien oder Dienstbereiche in einem Mobilfunknetzwerk definiert.

13. Managementsystem (904, 800) nach Anspruch 12, wobei die angegebene Geografie einen bzw. eine oder mehrere der folgenden definiert:
einen oder mehrere geografische Bereiche;
einen oder mehrere topologische Bereiche;
einen oder mehrere Edge-Dienst-Bereiche;
einen oder mehrere Cloud-Dienst-Bereiche;
einen oder mehrere Tracking-Bereiche; oder
eine oder mehrere Kennungen, die einen geografischen Bereich angeben; oder
einen oder mehrere Teilbereiche eines oder mehrerer Edge- oder Cloud-Dienst-Bereiche.

14. Managementsystem (904, 800) nach einem der Ansprüche 1 bis 13, wobei der EAS, der in dem EDN eingesetzt wird, in Abhängigkeit von seiner Kompatibilität mit Software in dem EDN ausgewählt wird.

15. Verfahren, das von einem Managementsystem (904, 800) durchgeführt wird, zur Bereitstellung von Edge-Diensten bei einem föderierten Einsatz von drahtlosen Kommunikationsnetzwerken, die eine Nutzung von Edge-Anwendungsserver-Diensten und - Ressourcen, EAS-Diensten und -Ressourcen) teilen, in denen ein föderierter EAS-Dienst über mehrere Edge-Plattformen einsetzbar ist, wobei das Verfahren umfasst:
Empfangen (s1002) einer Anfrage zum Bereitstellen eines Edge-Dienstes, wobei die Anfrage eine Geografie angibt, in der der Edge-Dienst bereitzustellen ist;
Identifizieren (s1004) mindestens eines Edge-Datennetzwerks, EDN, das zum Bereitstellen des angefragten Edge-Dienstes zu verwenden ist, zumindest zum Teil auf der Basis der angegebenen Geografie; und
Anfragen (s1006) eines Einsatzes oder einer Konfiguration mindestens eines EAS in dem mindestens einen EDN, um den angefragten Edge-Dienst in der angegebenen Geografie bereitzustellen.

## Revendications

1. Système de gestion (904, 800) destiné à la fourniture de services de périphérie dans un déploiement fédéré de réseaux de communications sans fil qui partagent l'utilisation de services et de ressources de serveur d'application périphérique (EAS), dans lequel un service EAS fédéré peut être déployé sur plusieurs plateformes périphériques, le système de gestion (904, 800) comprenant un ou plusieurs processeurs (805) agencés pour :
recevoir (s1002) une demande de fourniture d'un service périphérique, la demande indiquant une zone géographique dans laquelle le service périphérique doit être fourni ;
identifier (s1004) au moins un réseau de données périphériques, EDN, à utiliser pour fournir le service périphérique demandé sur la base d'au moins une partie de la zone géographique indiquée ; et
demander (s1006) le déploiement ou la configuration d'au moins un EAS dans ledit au moins un EDN afin de fournir le service périphérique demandé dans la zone géographique indiquée.

2. Système de gestion (904, 800) selon la revendication 1**,** dans lequel le ou les processeurs (805) sont en outre agencés pour :
en réponse à l'identification de l'EDN, envoyer une demande concernant la faisabilité du déploiement de l'EAS dans l'EDN ;
recevoir une réponse indiquant la faisabilité du déploiement de l'EAS dans l'EDN ; et
envoyer une indication quant au fait que le déploiement ou la configuration de l'EAS dans l'EDN soit faisable ; dans lequel
la demande de déploiement ou de configuration est effectuée en réponse à la réception d'une indication quant au fait que le déploiement de l'EAS dans l'EDN soit faisable.

3. Système de gestion (904, 800) selon la revendication 1 ou 2, dans lequel le ou les processeurs (805) sont en outre agencés pour :
en réponse à l'identification de l'EDN, envoyer une demande de réservation de ressources pour le déploiement de l'EAS dans l'EDN ; et
éventuellement, recevoir une réponse indiquant si les ressources demandées ont été réservées.

4. Système de gestion (904, 800) selon l'une des revendications 1 à 3, dans lequel le ou les processeurs (805) sont en outre agencés pour :
en réponse à l'identification de l'EDN, envoyer une demande d'informations tarifaires pour le déploiement de l'EAS dans l'EDN ; et
recevoir les informations tarifaires demandées pour le déploiement de l'EAS dans l'EDN.

5. Système de gestion (904, 800) selon la revendication 4, dans lequel le ou les processeurs (805) sont en outre agencés pour :
envoyer les informations tarifaires reçues ; et
éventuellement, recevoir une indication quant au fait que les informations tarifaires soient acceptées.

6. Système de gestion (904, 800) selon l'une des revendications 1 à 5, dans lequel le ou les processeurs (805) sont agencés pour :
demander la configuration de l'EAS dans l'EDN identifié afin de fournir le service périphérique demandé dans la zone géographique indiquée à l'aide d'une opération createMOI définie dans la norme TS 28.532 vl6.4.0 ; ou
demander le déploiement de l'EAS dans l'EDN identifié afin de fournir le service périphérique demandé dans la zone géographique indiquée à l'aide d'un système de virtualisation, d'une infrastructure de virtualisation des fonctions réseau, NFV, ou d'une infrastructure à base de conteneurs.

7. Système de gestion (904, 800) selon l'une des revendications 1 à 6, dans lequel le ou les processeurs (805) sont en outre agencés pour :
recevoir une indication quant au fait que le déploiement de l'EAS dans l'EDN ait abouti ; et
si le déploiement de l'EAS dans l'EDN a abouti, recevoir éventuellement une indication de l'EAS et d'une adjacence géographique associés à l'EAS par rapport à un ou plusieurs points connus dans un réseau mobile.

8. Système de gestion (904, 800) selon l'une des revendications 1 à 7, dans lequel le ou les processeurs (805) sont en outre agencés pour :
provisionner un système de mise en correspondance dans une fonction de réseau, NF, d'un réseau mobile, le système de mise en correspondance mettant en correspondance un équipement utilisateur à l'EAS.

9. Système de gestion (904, 800) selon la revendication 8, dans lequel le ou les processeurs (805) sont agencés pour mettre en place le système de mise en correspondance, qui met en correspondance l'équipement utilisateur avec l'EDN, par l'un ou plusieurs des moyens suivants :
mettre en correspondance un gNB utilisé par l'équipement utilisateur avec l'EDN ; ou
mettre en correspondance des informations géographiques, de latence, de fiabilité ou de bande passante associées à l'équipement utilisateur avec l'EDN.

10. Système de gestion (904, 800) selon l'une des revendications 1 à 9, dans lequel le système de gestion (904, 800) est un système de gestion d'un fournisseur de services informatiques en périphérie (ECSP) ou d'un réseau mobile terrestre public (PLMN).

11. Système de gestion (904, 800) selon l'une des revendications 1 à 10, dans lequel la demande visant à fournir un service périphérique est reçue d'un fournisseur de services d'application (ASP) au sein d'un réseau mobile.

12. Système de gestion (904, 800) selon l'une des revendications 1 à 11, dans lequel la zone géographique indiquée définit une ou plusieurs zones géographiques ou zones de service au sein d'un réseau mobile.

13. Système de gestion (904, 800) selon la revendication 12, dans lequel la zone géographique indiquée définit un ou plusieurs des éléments suivants :
une ou plusieurs zones géographiques ;
une ou plusieurs zones topologiques ;
une ou plusieurs zones de service périphériques ;
une ou plusieurs zones de service cloud ;
une ou plusieurs zones de localisation ; ou
un ou plusieurs identifiants indiquant une zone géographique ; ou
une ou plusieurs sous-zones d'une ou plusieurs zones de service périphériques ou cloud.

14. Système de gestion (904, 800) selon l'une des revendications 1 à 13, dans lequel l'EAS déployé dans l'EDN est sélectionné en fonction de sa compatibilité avec le logiciel de l'EDN.

15. Procédé mis en œuvre par un système de gestion (904, 800) destiné à la fourniture de services périphériques dans un déploiement fédéré de réseaux de communications sans fil qui partagent l'utilisation des services et des ressources du serveur d'application périphérique, EAS, dans lequel un service EAS fédéré peut être déployé sur plusieurs plateformes périphériques, le procédé comprenant :
la réception (s1002) d'une demande de fourniture d'un service périphérique, la demande indiquant une zone géographique dans laquelle le service périphérique doit être fourni ;
l'identification (s1004) d'au moins un réseau de données périphériques, EDN, à utiliser pour fournir le service périphérique demandé sur la base d'au moins une partie de la zone géographique indiquée ; et
la demande (s1006) du déploiement ou de la configuration d'au moins un EAS dans ledit au moins un EDN afin de fournir le service périphérique demandé dans la zone géographique indiquée.
